# FASCICULE DE BREVET EUROPEEN

(11) **EP 1 040 397 B1**
(45) Date de publication et mention de la délivrance du brevet: **27.10.2004**
(21) Numéro de dépôt: 99932943.6
(22) Date de dépôt: 21.07.1999
(51) Int. Cl.: G05B 19/418, G05B 19/042

(54) **ARCHITECTURE DE COMMUNICATION POUR SYSTEME INDUSTRIEL DE CONDUITE DE PROCEDE**
ÜBERTRAGUNGSSTRUKTUR FÜR INDUSTRIELLE PROZESSSTEUERUNGSSYSTEME
COMMUNICATION ARCHITECTURE FOR PROCESS CONTROL SYSTEM

(30) Priorité: 22.07.1998 FR 9809381
(43) Date de publication de la demande: 04.10.2000
(73) Titulaire: Areva T&D SA, 92309 Levallois-Perret Cedex (FR)
(72) Inventeur: HAUET, Jean-Pierre, F-92500 Rueil Malmaison (FR)
(74) Mandataire: Poulin, Gérard
(86) Numéro de dépôt international: PCT/FR1999/001797
(87) Numéro de publication internationale: WO 2000/005632

(56) Documents cités:
- EP-A- 0 822 498
- EP-A- 0 838 768
- DE-A- 19 615 190
- DE-A- 19 704 694

## Description

L'invention concerne une architecture de communication d'informations plus particulièrement destinée à être implantée dans un système industriel de conduite de procédé pour permettre des transmissions en temps partagé d'informations numérisées entre des unités d'exploitation programmées du système.

Des systèmes dans lesquels, une information disponible à un niveau du système, peut être remontée vers un niveau supérieur sont connus. On peut citer à cet égard la demande de brevet DE 197 04694 attribuée à Ricoh. Cette demande de brevet, traite des conditions dans lesquelles des périphériques connectés à un réseau du type Internet peuvent répondre aux requêtes transmises par un tel réseau en provenance d'un agent donné.

Il s'agit en l'occurrence essentiellement de la production à partir de périphériques répartis sur le réseau et agissant comme serveurs, de documents tels que des images ou des documents multi-media. On peut citer également dans ce type d'architecture la demande de brevet EP 0838768 attribuée à Hewlett-Packard, qui décrit l'insertion de serveurs HTTP dans des terminaux, c'est-à-dire dans des équipements de niveau bas. On peut enfin citer la demande de brevet DE 196 15 190 attribuée à Fritz Electronic, dans laquelle il est prévu un réseau intranet pour le contrôle de procédé. Un modem permet de connecter directement des unités à l'internet ou à un autre réseau intranet.

Comme il est connu, la gestion d'un système industriel de conduite de procédé implique la présence d'une architecture de communication pour assurer les transmissions d'informations entre les diverses unités d'exploitation programmées qui sont susceptibles d'intervenir dans la conduite du procédé de façon que les transmissions soient assurées d'une manière bien adaptée aux différents besoins rencontrés. Cette architecture est couramment composée d'un ou de plusieurs réseaux locaux, dits industriels, organisés autour d'une ou de plusieurs liaisons de type bus.

Il est classique dans de tels systèmes d'assurer une exploitation partagée dans le temps, des liaisons utilisées pour la transmission des informations entre unités d'exploitation programmées. Il est courant dans le domaine de la conduite de procédé industriel d'avoir des contraintes très strictes de transmission pour certaines informations. Ceci implique la mise en oeuvre de réseaux locaux, dits déterministes, qui sont organisés pour permettre le respect des contraintes temporelles de transmission des informations pour lesquelles cela est nécessaire, c'est-à-dire qui vise à l'acheminement d'une information dans une limite de temps déterminée, ou qui visent à ce résultat.

Il est alors connu de permettre aux informations dont la transmission n'est soumise qu'à des contraintes relativement souples en matière d'urgence d'exploiter les laps de temps plus ou moins régulièrement laissés disponibles par les informations prioritaires soumises à des contraintes plus sévères.

Dans de nombreux cas d'exploitation, il est avantageux de pouvoir accéder, à volonté et sans qu'il y ait nécessairement urgence, à des informations contenues dans une mémoire d'une quelconque unité d'exploitation programmée d'un système, par exemple par l'intermédiaire d'une autre unité programmée ou d'un ordinateur, via l'architecture de communication du système et quelle que soit la localisation de cette autre unité ou de cet ordinateur par rapport au système.

En particulier, lorsque le fonctionnement d'un système met en jeu des équipements très divers impliquant des intervenants différents et des interventions qui ne sont pas nécessairement planifiables, il est avantageux qu'un intervenant puisse accéder aisément aux informations dont il a besoin, au travers de l'architecture de communication du système et éventuellement depuis l'extérieur, à partir du moment où ces informations sont stockées d'une manière accessible par une unité d'exploitation programmée du système.

Un tel accès doit préférablement être réalisable par des intervenants susceptibles d'être très différents. Un système connu prévoit donc d'utiliser une architecture de communication où est exploitée une technique d'accès aux informations plus particulièrement mise en oeuvre dans le cadre d'Internet.

A cet effet, les informations qui sont disponibles dans les unités d'exploitation programmées et en particulier celles qui ont été collectées par l'intermédiaire de l'architecture de communication du système, sont insérées dans des pages HTML implantées dans une unité d'exploitation programmée du système qui est constituée par un ordinateur spécialisé où est implanté un serveur

HTTP. Cet ordinateur est par exemple connecté à un réseau externe 0 exploitant les techniques Internet, voire à Internet lui-même. Des intervenants, disposant d'un ordinateur convenablement équipé et ici supposé connecté au réseau 0, ou d'une unité programmée du système fonctionnellement équivalente, peuvent alors prendre connaissance des informations contenues dans les pages HTML stockées au niveau de l'ordinateur spécialisé. Un exemples d'architecture dans laquelle des informations contenues dans des dispositifs de terrain sont accessibles à un opérateur extérieur est donné dans la demande de brevet EP 822 498 attribuée à Bull SA. Ce document décrit un système d'administration d'un système informatique fondé sur un noeud d'administration (MN) qui surveille plusieurs noeuds N1, N2, Nn, en échangeant selon un protocole donné des informations pertinentes avec un agent autonome (SAA) implanté sur chacun des noeuds. Chaque noeud comporte une base de données BF qui contient les données propres aux objets à surveiller et qui sont représentés vis-à-vis du noeud d'administration par l'agent autonome SAA.

Toutefois cette solution n'est pas pleinement satisfaisante en particulier en ce qui concerne l'actualité des informations stockées. Or celle-ci peut être cruciale dans un système dont au moins certains équipements et notamment certaines unités de terrain, sont exploités en temps réel et ne doivent pas être perturbés pendant la conduite du procédé.

L'invention propose donc une architecture de communication en temps partagé d'informations numérisées, pour système industriel de conduite de procédé, organisée autour d'au moins un réseau local industriel supportant un trafic déterministe entre diverses unités d'exploitation programmées, notamment des unités de terrain situées à un niveau d'interface de procédé, qui traitent et stockent des informations auxquelles au moins une autre unité d'exploitation programmée est susceptible d'accéder, via ladite architecture.

Selon une caractéristique de l'invention, cette architecture comporte diverses unités d'exploitation programmées comprenant notamment des unités situées à un niveau intermédiaire ou à un niveau d'interface de procédé ou à un niveau de dispositif de contrôle de commande de terrain qui incluent individuellement un serveur de type HTTP pour pouvoir répondre par envoi de documents informatiques, éventuellement interactifs, à des requêtes reçues d'une autre unité du système ou d'un ordinateur, notamment externe au système, équipé(e) d'une pile de protocoles HTTP/TCP/IP et agissant en client, dans le cadre d'un trafic de messagerie exploitant les possibilités de transmission constitués par les intervalles de temps laissés disponibles par le trafic déterministe du ou des réseau(x) locaux industriels du système, sans perturber les échanges prioritaires et déterministes liés à la conduite en temps réel du procédé..

Selon une autre caractéristique de l'invention, l'architecture est constituée de manière que des unités soient organisées par grappe(s) autour d'au moins un réseau local industriel, de type bus de terrain, déterministe en temps réel, qui est propre à une grappe et qui relie les unités de la grappe à au moins une unité partagée servant éventuellement de passerelle ou de routeur vers un autre réseau local industriel desservant au moins une autre unité d'un niveau supérieur de l'architecture et notamment une unité de supervision et/ou éventuellement de passerelle ou de routage vers un réseau de communication externe, pour que le serveur HTTP d'une unité équipée d'un tel serveur réponde par un document informatique, éventuellement interactif, en cas de requête qui lui est adressée, via au moins l'un des réseaux, par une autre unité ou par un ordinateur, notamment externe au système, équipé(e) d'une pile de protocoles HTTP/TCP/IP, lorsque la requête concerne l'insertion ou l'extraction de paramètres et/ou de variables mémorisé(e)s au niveau de l'unité qui le comporte.

L'invention, ses caractéristiques et ses avantages sont précisés dans la description qui suit en liaison avec les figures évoquées ci-dessous.

La figure 1 présente un schéma de principe d'une architecture de communication connue pour système industriel.

La figure 2 présente un schéma de principe d'une architecture de communication selon l'invention.

La figure 3 présente un schéma simplifié d'un exemple d'architecture de communication, selon l'invention, pour système industriel de conduite.

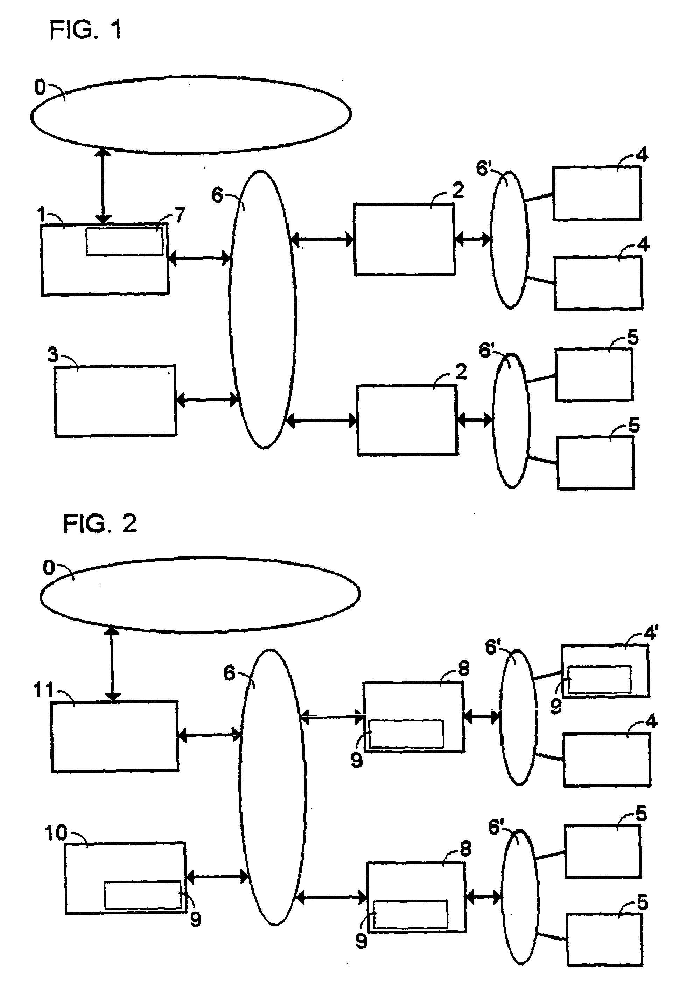

L'architecture de communication, selon l'art antérieur qui est illustrée en figure 1 est prévue pour assurer des échanges d'information entre des unités d'exploitation programmées 1, 2, 3 d'un système industriel de conduite de procédé comportant une pluralité de dispositifs de contrôle/commande dont par exemple des dispositifs de terrain, tels que des capteurs 4 et des actionneurs 5. Ces dispositifs sont contrôlés par des unités d'exploitation programmées représentées ici par les unités 2 qui sont supposées fournir et/ou recevoir des informations relatives aux opérations, notamment de commande et de mesure, réalisées par les dispositifs qu'elles contrôlent. Ces unités d'exploitation, telles que les unités 2, communiquent en fonction des besoins d'une part avec les dispositifs qu'elles contrôlent et d'autre part avec d'autres unités de niveau supérieur, telles 1 et 3, qui sont notamment chargées de la supervision du système industriel de conduite. Les communications s'établissent par l'intermédiaire de moyens de communication 6 de l'architecture auxquels les diverses unités sont plus ou moins directement reliées. Comme développé plus loin, les moyens de communication 6 sont classiquement de type réseau local industriel.

Des moyens de communication 6' permettent de relier les dispositifs de contrôle/commande du système aux unités d'exploitation qui les contrôlent, ces moyens de communication étant éventuellement eux aussi du type réseau local industriel.

Comme déjà indiqué plus haut, il est prévu une exploitation partagée dans le temps des liaisons que comportent les moyens de communication 6 et 6' pour assurer les transmissions d'informations entre les unités d'exploitation programmées et entre celles-ci et les dispositifs de contrôle, en permettant aux informations dont la transmission n'est soumise qu'à des contraintes relativement souples en matière d'urgence d'exploiter les laps de temps plus ou moins régulièrement laissés disponibles par les informations soumises à des contraintes temporelles plus sévères.

Pour permettre l'accès aux informations depuis l'extérieur du système, il est prévu un serveur 7 de type HTTP dans une unité de niveau supérieur, telle 1, qui stocke les informations qui lui sont fournies par les autres unités et par les dispositifs de terrain de manière à pouvoir les introduire dans des pages au format HTML auxquelles il est possible d'accéder à l'aide d'un ordinateur équipé pour permettre l'accès à de telles pages. Cet ordinateur non représenté ici est par exemple relié à l'unité 1 par un réseau 0 et par exemple par Internet.

Urr intervenant peut donc accéder ainsi à des informations, telles que des paramètres ou des variables propres au système, qui sont mémorisées au niveau de l'unité I, Il peut éventuellement fournir des informations au système, par exemple des informations de mise à jour, notamment s'il dispose lui-même d'un ordinateur équipé pour pouvoir agir en tant que serveur HTTP.

Comme déjà indiqué dans le préambule de la demande, cette solution n'est pas totalement satisfaisante dans la mesure où toutes les informations destinées à être accessibles de cette manière doivent être stockées et actualisées au niveau de l'unité 1 et où elles peuvent ne pas être exactes, notamment lorsqu'une information caractéristique d'un changement intervenu au niveau d'une autre unité ou d'un dispositif de terrain n'est pas encore parvenue à l'unité 1 et que la page HTML où elle doit apparaître est fournie à un intervenant demandeur avant actualisation. De plus, l'utilisation de l'unité 1 en tant qu'intermédiaire de stockage qu'il faut actualiser en permanence induit un trafic incessant d'informations, qu'il est avantageux d'éviter, dans les réseaux qui constituent l'ossature des moyens de communication 6 et 6'.

L'invention propose donc de modifier l'architecture de communication d'un système industriel de conduite de la manière schématisée sur la figure 2.

Cette architecture est destinée à assurer des échanges d'information entre des unités d'exploitation programmées d'un système industriel de conduite de procédé qui comporte une pluralité de dispositifs de contrôle/commande 4, 4', 5 contrôlés comme précédemment par des unités qui sont ici référencées 8 et qui différent des unités 2 au niveau de leurs moyens de communication avec les autres unités. Au moins certaines de ces unités et éventuellement certains dispositifs de contrôle/commande, tel 4', comportent en effet un serveur 9, de type HTTP. Dans la plupart des cas, ce serveur est relativement rudimentaire, dans la mesure ou notamment il n'a généralement pas besoin de comporter une base spécifique de données pour stocker les informations qu'il est susceptible de recevoir et de transmettre, en particulier lorsque ces données font déjà l'objet d'une mémorisation locale.

Ces informations sont prises en compte par le serveur 9 de l'unité, qui les stocke, pour pouvoir être incorporées dans des documents informatiques éventuellement interactifs transmis et par exemple dans des pages HTML. Ce sont par exemple des informations correspondant à des modifications de paramètres ou des évolutions de variables plus ou moins complexes.

Bien entendu d'autres unités d'exploitation programmées du système sont susceptibles d'être dotées d'un serveur 9, de type HTTP, plus ou moins élaboré suivant les besoins, comme symbolisé au niveau d'une unité 10 d'un niveau supérieur qui est ici représenté par les deux unités 10 et 11.

Les serveurs 9 disposent d'adresses individuelles de type internet qui permettent à un intervenant d'y accéder au moyen d'une unité du système convenablement programmée ou d'un ordinateur équipé logiciellement et matériellement de manière à pouvoir se comporter comme un client Internet. La mise en liaison de cette unité cliente ou de cet ordinateur agissant en client auprès d'un serveur d'une autre unité et notamment d'une unité de terrain s'effectue via l'ensemble de moyens de communication 6 que comporte l'architecture et éventuellement via Internet auquel cet ensemble est alors relié par une unité agissant comme une passerelle.

A cette fin, les différentes unités d'exploitation programmées du système industriel de conduite de procédé qui comportent un serveur HTTP sont munies de coupleurs de communication supportant les services et protocoles HTTP/TCP/IP en plus des services et protocoles standards du ou des réseaux locaux utilisés. Elles sont donc capables d'émettre et de recevoir des datagrammes IP transportés par ce ou ces réseaux, sans perturber les échanges déterministes d'information liées à la conduite de procédé en temps réel.

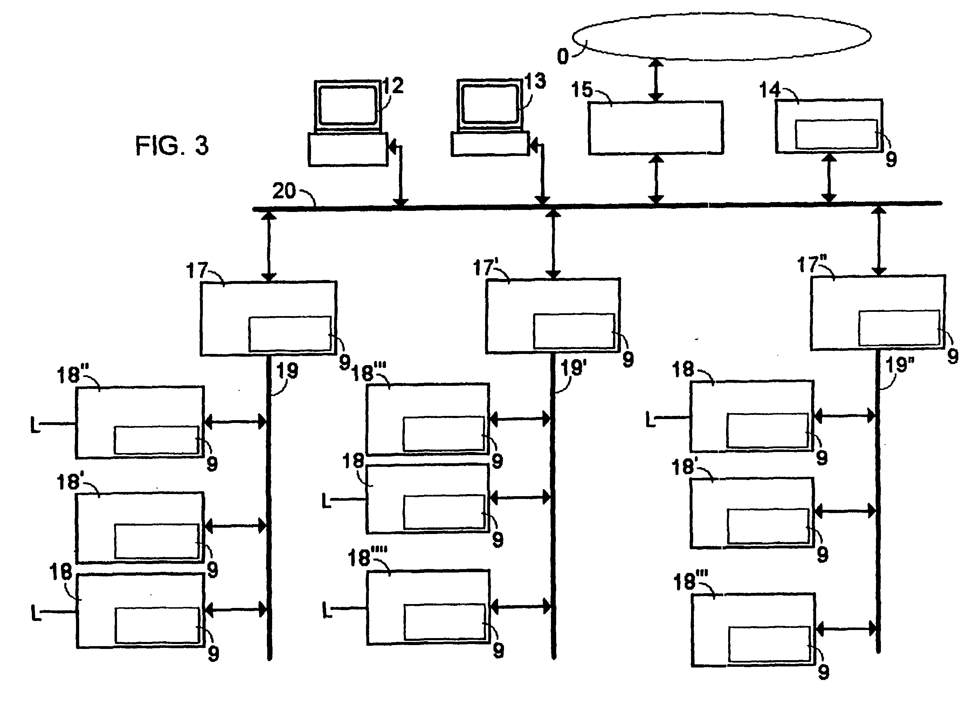

La figure 3 présente un exemple non limitatif d'un système industriel de conduite de procédé organisé à partir d'un système modulaire de contrôle-commande pour l'industrie; par exemple un système de type ALSPA 8000 de la demanderesse. Ce système comporte une pluralité d'unités d'exploitation programmées classiquement organisées chacune autour d'au moins un processeur, d'un ensemble de mémoires mortes et/ou vives et d'équipements auxiliaires, tels que notamment des coupleurs d'entrée/sortie. Un tel système intègre trois niveaux de fonctions opérationnelles correspondant successivement à un niveau de conduite et de supervision de procédé, un niveau intermédiaire d'automatisation du procédé et à un niveau d'entrée-sortie de procédé ou sont distribuées diverses unités.

Les unités d'exploitation programmées du niveau supérieur de conduite et de supervision de procédé sont ici représentées par une plate-forme opérateur 12 de conduite et de supervision de procédé, une station principale 13 d'opérateur de supervision, un calculateur de procédé 14, une unité 15 servant de routeur ou de passerelle de liaison à un réseau informatique externe 0, par exemple un Intranet ou Internet.

Les unités d'exploitation programmées du niveau intermédiaire d'automatisation du-procédé sont ici représentées par des contrôleurs d'automatisme 17, 17', 17'', ici supposés fonctionnellement différents, l'un étant par exemple supposé accueillir des applications d'automatisme séquentiel, un autre étant un contrôleur d'électronique de puissance programmé, etc. Ces unités sont elles aussi susceptibles d'être prévues pour pouvoir être exploitées en tant que passerelles assurant alors des conversions de protocoles ou de routeurs entre des réseaux locaux 19, 19' ou 19'' et 20 que comporte l'architecture de communication.

Les unités d'exploitation programmées de terrain situées au niveau d'interface avec le procédé peuvent être diverses. Elles sont ici représentées par des unités d'entrée/sortie 18 permettant une mise en communication de capteurs et/ou actionneurs classiques avec un contrôleur approprié du niveau d'automatisation de procédé, des capteurs et/ou actionneurs dits intelligents 18', des unités de régulation et de contrôle d'équipements électriques de conversion de puissance 18'', des unités de commande de variateurs de vitesse 18''', des stations locales d'opérateur 18"", etc.

Il doit bien entendu être compris que les unités évoquées ci-dessus ne sont signalées qu'à titre d'exemple et que les niveaux indiqués plus haut peuvent éventuellement être réduits en nombre par regroupement de fonctions d'un niveau avec des fonctions d'un autre dans des unités d'exploitation organisées de manière appropriée.

Dans l'exemple envisagé, l'architecture de communication du système industriel de conduite de procédé est supposée composée de réseaux locaux industriels déterministes conçus pour supporter à la fois un trafic déterministe prioritaire, dit de transmission de variables, et un trafic événementiel, dit de messagerie. Cette architecture est par exemple réalisée à partir d'une implémentation du réseau standardisé WORLDFIP que constitue le réseau F8000 de la demanderesse.

A travers ces réseaux locaux industriels, les unités d'exploitation du système sont reliées d'une part entre elles et éventuellement avec l'extérieur du système et d'autre part avec divers dispositifs notamment de contrôle/commande du système, non représentés, auxquels certaines sont physiquement reliées par des liaisons L. Celles-ci sont susceptibles d'être de types très divers tant dans leur nature que dans leur mode d'exploitation, elles ne seront pas développées ici dans la mesure où elles n'ont qu'un rapport indirect avec l'objet de l'invention.

Dans l'exemple envisagé en relation avec la figure 3, il est prévu que les unités de terrain 18, 18', 18'', 18"', 18"" soient organisées en grappe(s) autour d'au moins un réseau local de grappe, individuel, tel 19, 19' ou 19", généralement dit bus de terrain. Ce réseau de grappe est ici relié à une unité d'exploitation programmée de niveau intermédiaire, supposée constituée par exemple par un contrôleur 17, 17' ou 17".

Chacune de ces unités intermédiaires sert ici de passerelle ou de routeur chargé(e) de mettre en liaison les unités de terrain de la grappe auxquelles elle est reliée par l'un des réseaux de grappe et les unités de niveau supérieur auxquelles elle est reliée via un réseau local industriel 20 de niveau supérieur, couramment dit bus de cellule ou bus de salle de commande.

Les unités qui sont individuellement dotées de serveurs HTTP disposent d'adresses de type Internet et les coupleurs de communication, qu'elles comprennent, supportent les services et protocoles HTTP/TCP/IP en plus des services et protocoles standards des réseaux locaux industriels utilisés. Elles sont donc capables d'émettre et de recevoir des datagrammes IP qui sont par exemple encapsulés dans des messages transportés dans le cadre du trafic standard de messagerie, via les réseaux locaux tels que 19 et 20, sans perturber le trafic déterministe d'échange de variables réalisés par l'intermédiaire de ces réseaux. Ces datagrammes peuvent aussi être transmis dans le cadre d'un trafic se substituant ou s'ajoutant au trafic standard de messagerie, sans perturbation du trafic déterministe. Ceci permet donc à au moins une unité cliente de les adresser pour se faire communiquer les informations qu'elles stockent ou pour modifier certaines de ces informations, sans perturber le fonctionnement en temps réel du système de conduite.

Un tel accès s'effectue de manière transparente au travers d'une des unités intermédiaires servant de passerelle pour les unités de terrain d'une même grappe. Comme déjà indiqué, un intervenant peut accéder à un serveur 9 d'une unité, par l'intermédiaire d'une unité d'exploitation cliente dûment programmée du système et plus particulièrement d'une unité d'exploitation de niveau supérieur, au travers des réseaux locaux 19, 20 et d'une des unités intermédiaires. Cet intervenant peut agir à partir d'une unité cliente constituée par exemple par la station principale d'opérateur 13, ou à partir d'un ordinateur dûment équipé du système ou qui communique par l'intermédiaire du réseau informatique externe 0.

Un serveur recevant une requête d'une unité agissant en tant que cliente répond par un document informatique, éventuellement interactif. L'unité cliente dispose nécessairement d'une pile de protocoles HTTP/TCP/IP pour pouvoir d'une part adresser sa requête et d'autre part prendre en compte les informations reçues sous forme d'un document informatique du serveur qu'elle a adressé, ces informations étant par exemple incluses dans une page HTML. Ceci permet en particulier des insertions ou des extractions de paramètres et/ou variables, via un serveur 9, lorsque ces informations sont mémorisées par l'unité de terrain qui le contient.

Dans le système ici envisagé, le réseau local, tel 19, d'une grappe d'unités transmet des datagrammes IP, correspondant aux requêtes client/serveur parvenant de ou par l'unité partagée, telle 17, vers les serveurs des unités de la grappe ainsi qu'aux réponses de ces serveurs.

Comme connu, l'usage du protocole HTTP permet de réduire le temps d'utilisation des ressources (processus et socket) à une valeur très faible, puisqu'il n'y a pas de session établie entre une unité cliente et un serveur et que la connexion TCP/IP est rompue, dès que cette unité cliente a reçu le document HTML qu'elle a demandé au serveur. L'utilisation de ces ressources par une unité cliente reste donc toujours de durée très limitée, ce qui est particulièrement intéressant en matière d'occupation des moyens de transmission que comporte une architecture de communication d'une installation industrielle. Bien entendu les pages HTML produites au niveau d'un serveur d'une unité de terrain sont susceptibles de contenir des liens hypertextes permettant à une unité cliente de passer d'un serveur à un autre d'une manière prédéterminée, si besoin est.

## Revendications

1. Architecture de communication en temps partagé d'informations numérisées, pour système industriel de conduite de procédé, organisée autour d'au moins un réseau local industriel (6, 6') supportant un trafic déterministe entre diverses unités d'exploitation programmées (11, 10, 8, 4, 4',5), ces unités traitant et stockant des informations auxquelles au moins une autre unité d'exploitation programmée (11, 10) est susceptible d'accéder, via ladite architecture **caractérisée en ce qu'**elle comporte diverses unités d'exploitation programmées (10, 11 8, 4, 4', 5), comprenant notamment des unités (10, 8, 4') connectées au, au moins un, réseau local industriel (6, 6') et situées à un niveau intermédiaire (8) ou à un niveau d'interface de procédé ou à un niveau de dispositif de contrôle/commande de dispositif de terrain (4') qui incluent individuellement un serveur (9), de type HTTP, pour pouvoir répondre par envoi de documents informatiques éventuellement interactifs à des requêtes reçues d'une autre unité (10) du système ou d'un ordinateur, externe au système connecté audit système par l'intermédiaire d'un réseau (0) de technologie Internet, cette au moins autre unité interne (10, 18) ou externe étant également équipé(e) d'une pile de protocoles HTTP/TCP/IP et agissant en client dans le cadre d'un trafic de messagerie exploitant les possibilités de transmission constituées par les intervalles de temps laissés disponibles par le trafic déterministe du ou des réseau(x) locaux industriels (6, 6') du système, sans perturber les échanges prioritaires liés à la conduite en temps réel du procédé.

2. Architecture, selon la revendication 1, pour système industriel de conduite de procédé, où des unités de terrain programmées (18, 18', 18", 18''', 18'''') sont organisées par grappe(s) autour d'au moins un réseau local industriel (19, 19', 19"), de type bus de terrain qui est propre à une grappe et qui relie les unités (18, 18', 18'', 18''', 18'''') de la grappe à au moins une unité partagée (17, 17', 17'') servant éventuellement de passerelle ou de routeur vers un autre réseau local industriel (20) desservant au moins une autre unité programmée (14, 15) d'un niveau supérieur de l'architecture, notamment une unité (15) de supervision et/ou de passerelle vers un réseau de communication externe (0), pour que le serveur (9) HTTP d'une unité (18, 18', 18'', 18''', 18'''') de grappe équipée d'un tel serveur (9) réponde par un document informatique, éventuellement interactif, en cas de requête qui lui est adressée, via au moins l'un des réseaux (19, 19', 19''), par une autre unité (12-15, 17, 17', 17'', 18, 18', 18'', 18''', 18'''') ou par un ordinateur externe au système, équipé(e) d'une pile de protocoles HTTP/TCP/IP et agissant en client, lorsque la requête concerne l'insertion ou l'extraction de paramètres et/ou de variables mémorisé(e)s au niveau de l'unité qui le comporte.

3. Procédé de communication d'informations pour système de conduite de procédé industriel, dans lequel des informations numérisées nécessaires à la conduite du procédé industriel sont échangées en temps réel et de façon interne au système sur au moins un réseau (6, 6' 19) de terrain, selon un mode déterministe,
- entre
au moins un dispositif de terrain tel qu'un capteur ou un actionneur (4, 4', 5, 18, 18', 18'', 18''', 18'''') et au moins une unité (8, 17, 17' 17''') d'exploitation programmée de niveau intermédiaire ou une unité (10-15) d'exploitation programmée de niveau supérieur,
**caractérisé par le fait que**, pour permettre à un utilisateur externe au système l'accès, via un réseau (0) de type Intranet ou Internet raccordé à l'une de ces unités (10-15), à des informations mémorisées dans ledit dispositif de terrain (4, 4', 5, 18, 18', 18'', 18''', 18''') ou lesdites unités (8, 17, 17' 17''') d'exploitation programmées, des échanges sont effectués selon le protocole HTTP/TCP/IP entre
- le dispositif (8, 17, 17' 17''', 18, 18', 18'', 18''', 18''') où sont mémorisées lesdites informations, ledit dispositif pouvant être un dispositif (4, 5, 18, 18', 18'', 18''', 18'''') de terrain ou une unité (8, 17, 17' 17''') d'exploitation
et
- l'unité d'exploitation de niveau intermédiaire (8, 17, 17' 17''') ou de niveau supérieur (10-15) à laquelle est raccordé le réseau Intranet ou Internet, pendant les intervalles de temps disponibles ménagés sur le réseau (6, 6' 19) de terrain par le mode d'échange déterministe.

## Patentansprüche

1. Timesharing-Übertragungsstruktur für digitalisierte Informationen für ein industrielles Prozesssteuerungssystem, die um mindestens ein lokales industrielles Netz (6,6') herum organisiert ist, welches einen deterministischen Verkehr zwischen verschiedenen programmierten Betriebseinheiten (11,10,8,4,4',5) unterstützt, wobei diese Einheiten Informationen verarbeiten und speichern, auf die mindestens eine weitere programmierte Betriebseinheit (11,10) über die genannte Struktur zugreifen kann,
**dadurch gekennzeichnet, dass** sie verschiedene programmierte Betriebseinheiten (10,11,8,4,4',5) umfasst, welche im einzelnen Einheiten (10,8,4') aufweisen, die mit mindestens einem lokalen industriellen Netz (6,6') verbunden sind und sich auf einer Zwischenebene (8) oder einer Prozess-Schnittstellenebene oder auf einer Ebene einer Steuer-/Befehlsvorrichtung einer Feldeinheit (4') befinden, die individuell einen Server (9) vom HTTP-Typ aufweisen, um durch Senden von eventuell interaktiven Datendokumenten auf von einer anderen Einheit (101) des Systems oder auf von einem systemexternen Computer, der mit dem System über ein Netz (0) mit Internet-Technologie verbunden ist, gestellte Anfragen antworten zu können, wobei diese mindestens eine weitere interne oder externe Einheit (10,18) ebenfalls mit einem Protokollstapel HTTP/TCP/IP versehen ist und als Client im Rahmen eines Nachrichtenverkehrs arbeitet, der die Übertragungsmöglichkeiten nutzt, welche aus den Zeitintervallen bestehen, die von den durch den deterministischen Verkehr des oder der lokalen industriellen Netzes/Netze (6,6') des Systems zur Verfügung gelassen werden, ohne die prioritären Austausche bzw. Übertragungen in Zusammenhang mit der Durchführung des Prozesses in Echtzeit zu stören.

2. Struktur nach Anspruch 1 für ein industrielles Prozesssteuerungssystem, bei der die programmierten Feldeinheiten (18,18',18'',18''',18'''') in einem Cluster / in Clustern um mindestens ein lokales industrielles Netz (19,19',19'') vom Feldbus-Typ organisiert sind, das einem Cluster angehört und das die Einheiten (18,18',18'',18''',18'''') des Clusters mit mindestens einer gemeinsam genutzten Einheit (17,17',17'') verbindet, welche eventuell als Gateway oder als Router zu einem anderen lokalen industriellen Netz (20) dient, das mindestens eine weitere programmierte Einheit (14,15) auf einer höheren Strukturebene bedient, insbesondere eine Überwachungseinheit (15) und/oder Gatewayeinheit zu einem externen Kommunikationsnetz (0), damit der HTTP-Server (9) einer Cluster-Einheit (18,18',18'',18''', 18''''), die mit einem solchen Server (9) versehen ist, über ein Datendokument eventuell interaktiv im Fall einer an ihn gerichteten Anfrage über mindestens eines der Netze (19,19',19'') durch eine andere Einheit (12-15,17,17',17'',18, 18',18'',18''',18''''), oder aber durch einen system-externen Computer, der mit einem Protokollstapel HTTP/TCP/IP ausgestattet ist und als Client arbeitet, antwortet, wenn die Anfrage das Einfügen oder Extrahieren von Parametern und/oder von gespeicherten Variablen auf der Ebene der Einheit, die ihn enthält, betrifft.

3. Informationsübertragungsverfahren für ein industrielles Prozesssteuerungssystem, bei dem digitalisierte Informationen, die zur Durchführung des industriellen Prozesses notwendig sind, in Echtzeit und systemintern in mindestens einem Feldnetz (6,6',19) gemäß einem deterministischen Modus ausgetauscht werden, zwischen
mindestens einer Feldeinheit wie z.B. einem Messfühler oder einem Aktuator (4,4',5,18,18',18",18''',18''''), und mindestens einer programmierten Betriebseinheit (8,17,17',17''') mittlerer Ebene oder einer programmierten Betriebseinheit (10-15) höherer Ebene,
**dadurch gekennzeichnet, dass**, um einem externen Nutzer des Systems über ein mit diesen Einheiten (10-15) verbundenes Netz (0) vom Intranet- oder Internet-Typ den Zugang zu Informationen zu gestatten, die in der Feldeinheit (4,4',5,18,18',18'',18''',18'''') oder in den programmierten Betriebseinheiten (8,17,17',17''') gespeichert sind, Austausche bzw. Übertragungen gemäß dem HTTP-/TCP-/IP-Protokoll ausgeführt werden zwischen
- der Vorrichtung (8,17,17',17''',18,18',18'',18''',18''''), in der die Informationen gespeichert sind, wobei die Vorrichtung eine. Feldeinheit (4,5,18,18',18'',18''',18''') oder eine Betriebseinheit (8,17,17',17''') sein kann, und
- der Betriebseinheit auf mittlerer Ebene (8,17',17''') oder höherer Ebene (10-15), mit der das Intranet- oder Internet-Netz verbunden ist, und zwar während der verfügbaren Zeitintervalle, die im Feldnetz (6,6',19) durch den deterministischen Austauschmodus vorgesehen sind.

## Claims

1. A time-shared communications architecture for communicating digitized information for an industrial process control system, which architecture is organized around at least one industrial local area network (6, 6') conveying deterministic traffic between various programmed operating units (11, 10, 8, 4, 4', 5), which units process and store information which can be accessed by at least one other programmed operating unit (11, 10) via said architecture, said architecture being **characterized in that** it includes various programmed operating units (10, 11, 8, 4, 4', 5) in particular comprising units (10, 8, 4') connected to the at least one industrial local area network (6, 6') and situated at an intermediate level (8) or at a process interface level or at a site monitoring/control device level (4'), which units individually include servers (9) of the HTTP type so as to be capable of sending optionally interactive computer documents in response to requests received from another unit (10) of the system or from a computer external to the system, connected to said system by means of an Internet technology network (0), said at least other internal or external unit (10, 18) also being equipped with an HTTP/TCP/IP protocol stack and acting as a customer, in the context of messaging traffic making use of the transmission possibilities constituted by the time slots left available by the deterministic traffic of the industrial local area network(s) (6, 6') of the system, without disturbing the priority interchange related to the real time control of the process.

2. An architecture according to claim 1, for an industrial process control system, in which programmed site units (18, 18', 18", 18"', 18"") are organized in one or more clusters around at least one industrial local area network (19, 19', 19") of the site bus type which is specific to a cluster and which connects the units (18, 18', 18", 18"', 18"") of the cluster to at least one shared unit (17, 17', 17",), optionally serving as a gateway or as a router to another industrial local area network (20) serving at least one other programmed unit (14, 15) of a higher level of the architecture, in particular a supervision unit (15) and/or a unit serving as a gateway to an external communications network (0), so that the HTTP server (9) of a cluster unit (18, 18', 18", 18"', 18"") equipped with such a server (9) responds with an optionally interactive computer document if a request is addressed to it, via at least one of the networks (19, 19', 19"), by another unit (12-15, 17, 17', 17", 18, 18', 18", 18"', 18"") or by a computer external to the system, equipped with an HTTP/TCP/IP protocol stack and acting as a customer, when the request concerns inserting or extracting parameters and/or variables stored at the unit that includes said server.

3. A method of communicating information for an industrial process control system, in which method digitized information that is necessary to control the industrial process is interchanged in real time and in a manner internal to the system over at least one site network (6, 6', 19), in a deterministic mode,
- between
at least one site device such as a sensor or an actuator (4, 4', 5, 18, 18', 18", 18"', 18""), and at least one intermediate-level programmed operating unit (8, 17, 17', 17"') or at least one higher-level programmed operating unit (10-15),
said method being **characterized by** the fact that, in order to enable a user external to the system to access information stored in said site device (4, 4', 5, 18, 18', 18", 18"', 18"") or in said programmed operating units (8, 17, 17', 17"') via an Internet or Intranet type network (0) connected to one of the units (10-15), interchange is performed using the HTTP/TCP/IP protocol between
- the device (8, 17, 17', 17"', 18, 18', 18", 18"', 18'''') in which said information is stored, which device may be a site device (4, 5, 18, 18', 18", 18"', 18'''') or an operating unit (8, 17, 17', 17'''),
and
- the intermediate-level operating unit (8, 17, 17', 17''') or higher-level operating unit (10-15) to which the Intranet or Internet network is connected, for available time slots provided over the site network (6, 6', 19) by the deterministic interchange mode.
